(19) 

**Europäisches Patentamt**
**European Patent Office**
**Office européen des brevets**

(11)  **EP 4 126 779 B1**

(12)  **EUROPEAN PATENT SPECIFICATION**

(45) Date of publication and mention
of the grant of the patent:
**15.10.2025   Bulletin 2025/42**

(21) Application number: **21715652.0**

(22) Date of filing: **01.04.2021**

(51) International Patent Classification (IPC):
***C03C 17/36*** (2006.01)

(52) Cooperative Patent Classification (CPC):
**C03C 17/36; C03C 17/3626; C03C 17/3639;
C03C 17/3644; C03C 17/3652; C03C 17/366;
C03C 17/3681;** C03C 2217/78; C03C 2217/944;
C03C 2218/32; C03C 2218/355; C03C 2218/365

(86) International application number:
**PCT/EP2021/058666**

(87) International publication number:
**WO 2021/198445 (07.10.2021 Gazette 2021/40)**

(54) **COATED SUBSTRATES**

BESCHICHTETE SUBSTRATE

SUBSTRATS REVÊTUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.04.2020  EP 20167811**

(43) Date of publication of application:
**08.02.2023   Bulletin 2023/06**

(73) Proprietors:
• **AGC Glass Europe**
**1348 Louvain-La-Neuve (BE)**
• **AGC Inc.**
**Tokyo 100-8405 (JP)**

(72) Inventors:
• **USUI, Reo**
**6041 Gosselies Select (BE)**
• **HUBERT, Julie**
**1060 Bruxelles (BE)**
• **MERCIER, Virginie**
**deceased (BE)**

(74) Representative: **AGC Glass Europe**
**Technovation Centre**
**Intellectual Property Department**
**Rue Louis Blériot 12**
**6041 Gosselies (BE)**

(56) References cited:
**WO-A1-2005/115940     WO-A1-2018/202595
WO-A2-2014/191472**

**Description**

The present invention relates to a coated substrate provided with a functional coating and a magnetron sputtered topcoat of a mixed metal oxide comprising at least $SiO_x$, $TiO_y$, and $ZrO_z$, for a method to provide for said coated substrate and to the use of a topcoat.

Functional coatings such as those comprising magnetron sputtered dielectric layers are typically known to be sensitive to chemical and mechanical damages during their production, transport, processing, storage and/or handling. This limited mechanical, chemical and corrosion resistance usually limits their possible uses in contact with the external environment.

Various attempts were made at providing glazings with coatings having high chemical durability or mechanical durability, or both chemical and mechanical durability.

WO2009115596A1 relates to an essentially transparent glazing including an assembly of thin layers deposited in a vacuum with a magnetron, and having sun-proof and/or low-emission properties, wherein the surface protection layer comprises a layer containing titanium oxide and at least one other high-hardness metal oxide selected from the group including $ZrO_2$, $SiO_2$, $Cr_2O_3$. The glazing of the disclosure is capable of withstanding a thermal treatment at 550°C for 5 minutes without generating optical defects such as discolouring or iridescence. In the mixed oxide, the titanium oxide is present at least 40% by weight. The surface layer contains zirconium oxide in a proportion of 15 to 50% by weight.

WO2010031808A1 relates to a glazing that comprises at least one layer deposited by cathodic spraying under vacuum, said layer containing one or more oxides and a proportion in weight of titanium oxide of at least 40% and not exceeding 95%. The thickness of the layer in question and optionally the thickness of the other layers containing metal oxide is/are selected so that on a clear "float" glass sheet having a thickness of 4 mm, said layer(s) would yield a reflection of at least 15% and a light transmission of at least 60%. The layer or layer system in question further has a mechanical and/or chemical resistance comparable to that of layers produced by pyrolysis for obtaining products having the same kind of optical properties.

The above solutions however fail to provide for satisfactory mechanical durability against abrasion, encountered during transport and storage conditions, beyond typical dry brush test and/or Automatic Wet Rub Test (AWRT).

WO2018202595A1 relates to a coated substrate comprising: a substrate; a soft coating provided on at least a part of at least one face of the substrate; a protective sol-gel coating provided on at least a part of said face above the soft coating, to a process for making such coated substrate and to glazing units comprising such coated substrate. The sol-gel coating comprises a mixture of titanium oxide, silicon oxide and optionally bismuth oxide and/or cerium oxide in theoretical weight ratios of titanium oxide $TiO_2$ /silicon oxide $SiO_2$ ranging from 0.10 to 3. When zirconium oxide is present, the ratio zirconium oxide/silicon oxide ranges from 0.10 to 3. The ratio titanium oxide/zirconium oxide ranges from 0.10 to 10. The thickness of the sol-gel coating typically ranges from 50 to 500 nm. This solution has the main drawbacks of providing for a significantly thick layer of the protective layer and requires an additional mandatory step of heating for curing the sol-gel coating, together with additional production constraints, as a change of production line is required. That is, intermediate steps which may impart damages, are required before any protection is provided to the coated substrate by the sol-gel coating.

There remains a need to develop coated substrates, particularly glass substrates provided with a functional coating having improved mechanical, chemical and corrosion resistance while not significantly impacting the emissivity and/or the aesthetics of the coating.

There remains a need to develop coated substrates, particularly glass substrates provided with a functional coating having improved mechanical, chemical and corrosion resistance while not significantly impacting the emissivity, nor the aesthetics of the coating, that is, preserving the optical properties of said functional coating.

The present invention aims at providing for coated substrate comprising a transparent substrate having two major opposing first and second surfaces, wherein at least one surface is provided with a functional coating, characterized in that the transparent substrate is provided, above and in contact with the functional coating, with a magnetron sputtered topcoat of a mixed metal oxide comprising at least $SiO_x$, $TiO_y$, and $ZrO_z$ wherein x, y, z range from 1.8 to 2.2,

wherein the topcoat comprises

- from 10 to 65 at% silicon,
- from 8 to 38 at% titanium,
- from 25 to 80 at% zirconium,

for a total of 100 at% of the metals, and wherein the topcoat has a thickness from 0.1 to 10 nm.

A method to provide for said coated substrate is also provided.

Heat treated coated substrates and multiple glazing units are provided.

The present topcoat is a magnetron sputtered mixed metal oxide comprising at least $SiO_x$, $TiO_y$, and $ZrO_z$ wherein x, y, z range from 1.8 to 2.2,
wherein the topcoat comprises

- from 10 to 65 at% silicon (Si),
- from 8 to 38 at% titanium (Ti),
- from 25 to 80 at% zirconium (Zr),

 for a total of 100 at% of the metals including impurities and
 wherein the topcoat has a thickness from 0.1 to 10 nm.

Impurities are considered as the additional metals that are practically indissociable from the preceding metals. This is particularly the case for yttrium and/or hafnium. When these additional metal are present, their content remains relatively limited and does not exceed 1 at% of the whole, and usually remains below 0.8 at%. They are not considered in the calculation of the topcoat active content. Said active content is considered as the sum of only the contributions of titanium, zirconium and silicon, as providing for the mechanical durability in the scope of the present invention. Aluminium may be present as a minor element in amounts < 2.0 at%, alternatively < 1.0 at%.

In some embodiments of the invention, the above ranges for the Si, Ti, and Zr in the topcoat may independently vary for one from the other. The amount of Si may alternatively range from 15 to 60 at%. The amount of Ti may alternatively range from 10 to 35 at%. The amount of Zr may alternatively range from 30 to 70 at%. These amounts may thus vary independently for each metal, provided the total is 100 at% of the metal, including impurities.

The amounts of each metal may be determined by methods available to the skilled person, such as X-ray photoelectron spectroscopy (XPS), X-ray fluorescence (XRF), and others. These analysis may be carried out on the sputtered topcoat using the usual procedures known in the art.

The amounts are provided for an optimal topcoat, surprisingly providing for a superior mechanical durability against abrasion, for functional coatings having to be transported or stored. It was unexpectedly found, contrary to the teaching of WO2009115596A1, that an amount of oxide of titanium > 40% is not providing the necessary durability when the titanium is combined with both silicon and zirconium simultaneously, in the ranges as claimed.

The present topcoat may have a thickness ranging from 0.1 to 10.0 nm, alternatively from 0.5 to 5.0 nm, alternatively from 2.0 to 5.0 nm.

Such a thickness allows for an improved mechanical durability while minimizing the optical contribution to the functional coating underneath. The topcoat is permanent, in that it is not removed or modified upon optional heat treatment of the transparent substrate. There is also no detrimental impact on the optical properties of the underlying functional coating.

The refractive index n of the present topcoat material in the ranges as claimed may range of from 1.90 to 2.25, at a wavelength of 550 nm, depending on its final composition.

The transparent substrate may be a glass substrate, or a plastic substrates, such as poly(methyl meth)acrylate (PMMA), polycarbonates, polyethyleneterephthalate (PET), polyolefins, polyvinyl chloride (PVC), or mixtures thereof. Transparency of a substrate is considered when T is superior to 10%, alternatively superior to 20%, alternatively superior to 30%.

In most instances, the transparent substrate is a glass substrate.

The glass may be of any type, such as conventional float glass or flat glass, and may be of any composition having any optical properties, e.g., any value of visible transmission above 10%, ultraviolet transmission, infrared transmission, and/or total solar energy transmission.

The glass substrate may be a soda-lime, a borosilicate, a leaded glass, or an aluminosilicate glass. The substrate may be regular a clear, colored or extra-clear (i.e. lower Fe content and higher transmittance) glass substrate. Further examples of glass substrates include clear, green, bronze, or blue-green glass substrates.

The glass may be annealed, tempered or heat strengthened glass.

The transparent glass substrate may have a thickness ranging from 0.5 mm to about 15 mm, alternatively from 1 mm to about 10 mm, alternatively from 1 mm to about 8 mm.

The transparent glass substrate may also be considered suitable for the present invention, when having a thickness ranging from 0.5 to 2 mm.

The transparent substrate typically has two major opposing first and second surfaces, where at least a part of the first surface is provided with the functional coating.

The present topcoat is deposited over, and in contact of, at least a part of the functional coating provided on a least one surface of the transparent substrate, to protect said functional coating from mechanical and/or chemical damage during shipment, storage, handling, processing and/or in final use.

The second surface of the transparent substrate may be coated with the same or a different functional coating. In such instances, the present topcoat may be provided on the functional coating provided on either one or on both of the two coated surfaces, that is, either one of the coating on the first surface or the second surface, or on both coatings of the first and second surfaces.

In the scope of the present invention, the term "functional coating" refers to a coating which modifies one or more physical properties of the substrate, e.g., optical, thermal, chemical or mechanical properties. Such a functional coating is not intended to be removed from the substrate during subsequent processing. The functional coating is typically a permanent or "non-removable" coating.

The functional coating may be a solar control coating, a conductive coating, an antireflective coating, a decorative coating and/or a low emissivity coating.

The functional coating may be a single layer or a stack of thin layers, that is, a multiple layer coating, and may include one or more metals, non-metals, semi-metals, semiconductors, or alloys, compounds, composites, combinations, or blends thereof.

When discussing a stack of thin layers in the present invention, it is typically understood that a first layer be the first applied on the substrate, a second being the second layer applied on the substrate, above the first layer. The successive order of the positions is considered relative to the substrate onwards, up to the uppermost layer.

In the scope of the present invention, the terms "below", "underneath", "under" indicate the relative position of a layer vis a vis a next layer, within the layer sequence starting from the substrate. In the scope of the present invention, the terms "above", "upper" indicate the relative position of a layer vis a vis a next layer, within the layer sequence starting from the substrate.

In the scope of the present invention, the relative positions of the layers within the stack do not necessarily imply direct contact between the layers. That is, some intermediate layer may be provided between the first and second layer. For example, a first layer "deposited over" the substrate does not preclude the presence of one or more other coating layers of the same or different composition located between that first layer film and the substrate, provided the objective of the present invention is not jeopardized.

In some instances, a layer may actually be composed of several multiple individual layers.

The present topcoat is understood to be in an upper position relative to the functional coating provided on the first surface of the transparent substrate. That is, the present topcoat is situated the furthest away from the transparent substrate relative to the first deposition surface of the substrate, typically in contact with air.

The present topcoat is the uppermost layer above the functional coating, in direct contact with the last layer of said functional coating. In most instances, the last layer of the functional coating does not provide for mechanical and/or chemical durability. In such instances, the present topcoat provides for mechanical and chemical durability of the functional coating.

In some instances, the functional coating may initially comprise an uppermost layer providing for some mechanical and/or chemical durability. In such instances, the present topcoat provides for even superior mechanical and chemical durability of the functional coating, particularly in view of abrasion.

The functional coating may have a thickness ranging from 10 to 1000 nm.

Unless stated otherwise, all layer thicknesses herein are geometrical layer thicknesses.

In certain embodiments of the invention, the functional coating may be a solar control coating, where the solar control coating includes visible, infrared or ultraviolet energy reflecting or absorbing coatings.

In certain embodiments of the invention, the functional coating may be an electrically conductive coating such as an electrically conductive heated window coating or a single-film or multi-film coating capable of functioning as an antenna.

A functional coating may be a low emissivity coating typically allowing visible wavelength energy, e.g., about 400 nm to about 780 nm, to be transmitted through the coating but reflecting shorter-wavelength solar infrared energy and/or thermal infrared energy, typically intended to improve the thermal insulating properties of architectural glazings. By "low emissivity" is meant emissivity less than about 0.3, alternatively less than about 0.2.

The functional coating may be a single layer metal oxide coating, a multiple layer metal oxide coating, a non-metal oxide coating, or a multiple layer coating.

In certain embodiments of the invention, single layer metal oxide coatings include those coatings comprising a zinc oxide doped with aluminium, gallium or hafnium; a mixed oxide of zinc and tin; tin oxide possibly doped with fluor or antimony; indium oxide possibly doped with tin; or the like.

In certain embodiments of the invention, multiple layer metal oxide coatings include those coatings comprising at least one layer of high refractive index material, and at least one layer of low refractive index material, that is, those coatings having layers of materials having alternating refractive indices. Such coatings are typically represented with a coating comprising a first layer of material having a low or high refractive index, a second layer of material having a high or low refractive index, a third layer of material having a low or high refractive index, a fourth layer of material having a high or low refractive index, and optional protective layer. A low refractive index is typically a refractive index < 1.8, or typically < 1.7, while a high refractive index is typically a refractive index > 1.8, or typically $\geq$ 1.9 or $\geq$ 2.0. Some layers may have intermediate refractive indices comprised of from 1.7 to < 1.9. Refractive indices are typically considered at a wavelength of 550 nm.

In certain embodiments of the invention, the functional coating may also be a multiple layer coating comprising an alternating arrangement of n infrared reflective (IR) layers and n + 1 dielectric layers, with n ≥ 1, such that each IR layer is surrounded by two dielectric layers.

The IR layers may be made of silver, gold, palladium, platinum or alloys thereof. The functional layer may have a thickness from 2 to 30 nm, alternatively from 5 to 20 nm, alternatively from 7 to 18 nm. These thickness ranges may enable the desired low emissivity and/or solar control function and/or conductivity to be achieved while retaining a good light transmission.

The dielectric layers may typically comprise oxides, nitrides, oxynitrides or oxycarbides of Zn, Sn, Ti, Zr, Si, In, Al, Bi, Ta, Hf, Mg, Nb, Y, Ga, Sb, Mg, Cu, Ni, Cr, Fe, B or mixtures thereof.

In certain embodiments of the present invention, the dielectric layers may comprise oxides, nitrides, oxynitrides or oxycarbides of Zn, Sn, Ti, Zr, Si, In, Al, Nb, Sb, Ni, Cr, or mixtures thereof. Alternatively, the dielectric layers may comprise oxides, nitrides, oxynitrides of Zn, Sn, Ti, Zr, Si, In, Al, Nb, Sb, Ni, Cr, or mixtures thereof.

These materials may be eventually doped, where examples of dopants include aluminium, zirconium, or mixtures thereof. The dopant or mixture of dopants may be present in an amount up to 15 wt %.

Typical examples of dielectric materials include, but are not limited to, silicon based oxides, silicon based nitrides, zinc oxides, tin oxides, mixed zinc-tin oxides, silicon nitrides, silicon oxynitrides, titanium oxides, aluminum oxides, zirconium oxides, niobium oxides, aluminum nitrides, bismuth oxides, mixed silicon-zirconium nitrides, and mixtures of at least two thereof, such as for example titanium-zirconium oxide.

The dielectric layer may consist of a plurality of individual layers comprising or essentially consisting of the above materials.

The dielectric layers may each have a thickness ranging from 0.1 to 200 nm, alternatively from 0.1 to 150 nm, alternatively from 1 to 120 nm, alternatively from 1 to 80 nm. Different dielectric layers may have different thicknesses. That is, the first dielectric layer may have a thickness that is the same or different, greater or smaller, compared to the thickness of the second or third or any other dielectric layer.

When there are two IR functional layers (when n = 2), the second dielectric layer may be referred to as the "internal dielectric layer", as it is sandwiched between two IR functional layers.

When there are three IR functional layers (when n = 3), the second and third dielectric layers may be referred to as "internal dielectric layers", as they are respectively sandwiched between two IR functional layers.

The multiple layer coating may comprise a seed layer underneath at least one IR layer, and/or the coating may comprise a barrier layer on at least one IR layer. A seed layer is typically provided to assist in forming a good quality film of the IR material, that is, providing for a homogeneous and stable layer of IR material. A barrier layer is typically provided to assist in protecting the IR material from degradation induced by the formation of any layer above it, for example to protect it from oxygen or oxygenated species which may deteriorate the quality of the IR layer and also from deterioration due to heat treatments.

A given IR layer may be provided with either a seed layer, or a barrier layer or both. A first IR layer may be provided with either one or both of seed and barrier layers, and a second IR layer may be provided with either one or both of seed and barrier layers and further so. These constructions are not mutually exclusive. The seed and/or barrier layers may have a thickness from 0.1 to 35 nm, alternatively 0.5 to 25 nm, alternatively 0.5 to 15 nm, alternatively 0.5 to 10 nm.

The multiple layer coating may also comprise a thin layer of sacrificial material having a thickness < 15 nm, alternatively < 9 nm, provided above and in contact with at least one functional layer. Examples of sacrificial material include titanium, zinc, nickel, chrome, oxides of Ni, oxides of Ni alloys, oxides of Cr, oxides of Cr alloys, $NiCrO_x$, $NiCrO_xN_y$, zinc oxide, tin oxide, or other suitable material or mixture thereof.

A dielectric layer may be provided with an absorbing layer adjusted in order to selectively alter transmission of the coated article. In certain examples, the thickness of said absorbing layer can be adjusted to significantly adjust the transmission of the coated article without adversely affecting coloration thereof. Examples of absorbing layer include Ni, Cr, NiCr, $NiCrN_x$, NiCrW, CrN, ZrN, TiN, Ti, Zr, $NiO_x$, or the like. Such an absorption layer may located such that at least one of the IR layer is located over the absorption layer, optionally, such an absorbing layer may be sandwiched between and contacting a first and a second layer comprising silicon nitride. The absorbing layer may have a thickness ranging from 0.5 to 10 nm.

The multiple layer coating may optionally already comprise a uppermost layer including oxides of Ti, Zr, or mixed oxide of Ti and Zr with 45-65 %wt Ti; or oxides of Si, Al; or oxide of Zr and Al; or nitrides of Si, Al. Such uppermost layer may be replaced or topped by the present topcoat.

A first example of multiple layer coating serving as a low emissivity coating comprises at least one silver layer, and a sequence : substrate/MeO/ZnO:AlSi/Ag/AlSi-MeO where MeO is a metallic oxide such as $SnO_2$, $TiO_2$, $In_2O_3$, $Bi_2O_3$, $ZrO_2$, $Ta_2O_5$, $SiO_2$ or $Al_2O_3$ or a mixture thereof.

An second example of multiple layer coating serving as low emissivity coating, includes a first dielectric layer including silicon nitride; first Ni or NiCr inclusive layer; an infrared (IR) reflecting layer comprising silver; a second Ni or NiCr inclusive layer; and a second dielectric layer including silicon nitride. Such a multiple layer coating may optionally comprise a topcoat of a mixed (oxi)nitride of SiZr, or mixed oxide of TiZr.

A third example of multiple layer coating comprises

    * an infrared (IR) reflecting layer contacting and sandwiched between first and second layers, said second layer comprising NiCrOx; and
    * wherein at least said second layer comprising NiCrOx is oxidation graded so that a first portion of said second layer close to said infrared (IR) reflecting layer is less oxidized than a second portion of said second layer that is further from said infrared (IR) reflecting layer.

A fourth example of multiple layer coating comprises: a dielectric layer; a first layer comprising zinc oxide located over the dielectric layer; an infrared (IR) reflecting layer comprising silver located over and contacting the first layer comprising zinc oxide; a layer comprising an oxide of NiCr located over and contacting the IR reflecting layer; a second layer comprising zinc oxide located over and contacting the layer comprising the oxide of NiCr; and another dielectric layer located over the second layer comprising zinc oxide.

A fifth example of multiple layer coatings comprises: a first dielectric layer; a first infrared (IR) reflecting layer comprising silver located over at least the first dielectric layer; a first layer comprising zinc oxide located over at least the first IR reflecting layer and the first dielectric layer; a second IR reflecting layer comprising silver located over and contacting the first layer comprising zinc oxide; a layer comprising an oxide of NiCr located over and contacting the second IR reflecting layer; a second layer comprising zinc oxide located over and contacting the layer comprising the oxide of NiCr; and another dielectric layer located over at least the second layer; comprising zinc oxide.

A sixth example of multiple layer coating comprises: a first dielectric layer; a first layer comprising zinc oxide located over the dielectric layer; an infrared (IR) reflecting layer comprising silver located over and contacting the first layer comprising zinc oxide; a second layer comprising zinc oxide located over the IR layer; and a second dielectric layer located over the second layer comprising zinc oxide. The first and second dielectric layers may comprise several layers, among which layers of varying composition in zinc oxide, that is, layers of zinc oxide, zinc oxide doped with aluminium, or layers of mixed oxide of zinc and tin, having a ratio Sn/Zn ranging from 0.5 to 2 by weight, or having a ratio Sn/Zn ranging from 0.02 to 0.5 by weight; layers of silicon nitride; layers of titanium oxide; among others. The first and second layers comprising zinc oxide may also have varying composition in zinc oxide, that is, layers of zinc oxide; zinc oxide doped with aluminium; mixed oxide of zinc and tin; mixed oxide of zinc, titanium and aluminium; among others.

A seventh example of multiple layer coating comprises, in sequence: a first dielectric layer; a first IR layer comprising silver; a second dielectric layer; a second IR layer; a third dielectric layer. The first, second and third dielectric layers may comprise several layers, among which layers of varying composition in zinc oxide, that is, layers of zinc oxide, zinc oxide doped with aluminium, or layers of mixed oxide of zinc and tin, having a ratio Sn/Zn ranging from 0.5 to 2 by weight, or having a ratio Sn/Zn ranging from 0.02 to 0.5 by weight; layers of mixed oxide of zinc, titanium and aluminium; layers of silicon nitride; layers of titanium oxide; among others. In some instances, the IR layers may be independently provided with a metallic barrier layer such as Ti, Ni, NiCr, or the like.

An eight example of multiple layer coating comprises, in sequence: a first dielectric layer; a first IR layer comprising silver; a second dielectric layer; a second IR layer; a third dielectric layer; a third IR layer; a fourth dielectric layer. The first, second, third and fourth dielectric layers may comprise several layers, among which layers of varying composition in zinc oxide, that is, layers of zinc oxide, zinc oxide doped with aluminium, or layers of mixed oxide of zinc and tin, having a ratio Sn/Zn ranging from 0.5 to 2 by weight, or having a ratio Sn/Zn ranging from 0.02 to 0.5 by weight; layers of mixed oxide of zinc, titanium and aluminium; layers of silicon nitride; layers of titanium oxide; among others. In some instances, the IR layers may be independently provided with a metallic barrier layer such as Ti, Ni, NiCr, or the like.

A wide variety of multiple layer coatings may be provided with the present coated substrate, benefitting from the topcoat providing for protection against mechanical damages. At the same time, optical properties remain within an acceptable variation as compared to the coating without the topcoat, with Delta T < 2%, Delta R < 2%, and Delta E < 5.

A method to prepare a coated substrate comprises, in sequence, at least the steps of:

    1. Providing for a transparent substrate having two major opposing first and second surfaces
    2. Depositing a functional coating on at least a part of the first surface of the transparent substrate,
    3. Depositing, above and in contact with the functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

    -    from 10 to 65 at% silicon,
    -    from 8 to 38 at% titanium,

- from 25 to 80 at% zirconium,

for a total of 100 at% of the metals, and
wherein the topcoat has a thickness from 0.1 to 10 nm.

The deposition step of the topcoat using magnetron sputtering allows for the process to be integrated easily into an existing production line providing for the functional coating already on the transparent substrate. The magnetron deposition also allows for the deposition of a topcoat layer having a thickness from 0.1 to 10 nm. Such a thin layer is found effective in providing for the necessary mechanical durability, without negatively impacting the chemical durability and optical properties of the functional coating.

The functional coating may typically be deposited over the substrate by chemical vapor deposition (CVD), atmospheric pressure CVD (APCVD), low-pressure CVD (LPCVD) , plasma-enhanced chemical vapor deposition (PECVD), LPCVD (low pressure chemical vapor deposition), physical vapor deposition, magnetron sputtering, ion assisted deposition.

Individual layers of the same functional coating may be provided by different deposition methods. Typically, they may however be deposited using the same technique.

In some instances, at least one layer of the functional coating may be deposited by magnetron sputtering. In some instances, all the layers of the functional coating are deposited by magnetron sputtering.

The topcoat is deposited using magnetron sputtering. The efficiency of the topcoat to provide for the mechanical and chemical durability is optimal if it is deposited by magnetron sputtering, compared to a CVD or solgel method. The layer deposited by magnetron sputtering is effective without any prior heating or additional process step, at a thickness ranging of from 0.1 to 10 nm, alternatively from 0.5 to 5.0 nm, alternatively from 2.0 to 5.0 nm. The layer so deposited also does not significantly impact the optical properties of the functional coating, with Delta T < 2%, Delta R < 2%, and Delta E < 5.

The deposition of the topcoat using magnetron sputtering may be effected using either metallic or ceramic targets to provide for the at least three titanium, zirconium or silicon elements.

The at least there elements may be independently provided from either one or more of a ceramic or a metallic target. Various combinations and co-sputtering alternatives may exist, provided the magnetron sputtered topcoat deposited on the functional coating comprises a mixed metal oxide comprising at least $SiO_x$, $TiO_y$, and $ZrO_z$ wherein x, y, z range from 1.8 to 2.2,

and wherein the topcoat comprises

- from 10 to 65 at% silicon,
- from 8 to 38 at% titanium,
- from 25 to 80 at% zirconium,

for a total of 100 at% of the metals, and wherein the topcoat has a thickness from 0.1 to 10 nm.

A metallic target may comprise at least one of titanium, zirconium or silicon. A metallic target may comprise two or more of titanium, zirconium or silicon.

A ceramic target may comprise at least one oxide of titanium, zirconium or silicon. A ceramic target may comprise two or more oxides of titanium, zirconium or silicon.

A ceramic target may comprise two element selected from titanium, zirconium or silicon, and a metallic target may comprise the third element.

In some instances, one element of the sputtered topcoat may be provided from both a ceramic target and a metallic target at the same time.

A ceramic target may comprise at least one oxide of a metal, and a metallic form of at least one other metal.

A ceramic target may comprise at least one oxide of titanium or zirconium, and a metallic form of silicon.

In those instances, the three elements may be provided from multiple independent targets, used in conjunction, also called co-sputtering, where the targets may each be a ceramic or a metallic target.

The sputtering or deposition from more than one target has the advantage of providing for a variety of topcoats comprising at least silicon, titanium and zirconium, tunable for the desired mechanical durability. This also has the advantage of allowing the modulation of the deposition rates and/or allowing easy replacement of one target or another depending on the material consumption during processing. This also has the advantage of modulating the stoichiometry of the topcoat as a function of the gas used during sputtering.

In other instances, the three elements may be provided from one single target.

A ceramic target may comprise at least the oxides of the three elements, or a metallic target may comprise at least the three elements in metallic form.

A ceramic target may comprise the oxides of titanium and zirconium, and a metallic form of silicon.

The sputtering or deposition from one single target comprising at least silicon, titanium and zirconium, has the advantage of providing for a reproducible and homogeneous topcoat.

The topcoat is typically sputtered in a gas flow containing argon or oxygen or both. Various mixtures may be provided for each gas, to provide for the required stoichiometry of the topcoat.

A further advantage of the present topcoat is that it may be subjected to a heat treatment, and as such, provide for protection of the functional coating through such heat treatment.

The heat treatment step is only optional, and will be considered as requires the end use of the coated substrate, since the topcoat itself will provide protection even though it is no heat treated.

A method to prepare a heat treated coated substrate comprises, in sequence, at least the steps of:

1. Providing for a transparent substrate having two major opposing first and second surfaces,
2. Depositing a functional coating on at least a part of the first surface of the transparent substrate,
3. Depositing, above and in contact with the functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

4. Submitting the coated substrate to a heat treatment.

In some embodiments of the present method, compatible with other embodiments of the present invention, the above ranges for the Si, Ti, and Zr in the topcoat may independently vary for one from the other. The amount of Si may alternatively range from 15 to 60 at%. The amount of Ti may alternatively range from 10 to 35 at%. The amount of Zr may alternatively range from 30 to 70 at%. These amounts may thus vary independently for each metal, provided the total is 100 at% of the metal, including impurities.

In the scope of the present invention, when steps are in sequence, it is intended to mean that they are effected in the order listed. There may however be additional intermediate steps added within the sequence. Such additional intermediate steps may be of washing, transporting displacing, measuring, cutting, or the like.

The heat treatment may be one of those encountered in a bending (also known as curving), annealing (also known as strengthening) or tempering process.

A suitable thermal treatment comprises heating the coated glass sheet to a temperature of at least 560°C in air, for example between 560°C and 700°C, in particular around 640°C to 670°C, during around 3, 4, 6, 8, 10, 12 or even 15 minutes according to the heat-treatment type and the thickness of the glass sheet. The treatment may comprise a rapid cooling step after the heating step, to introduce a stress difference between the surfaces and the core of the glass so that in case of impact, the so-called tempered glass sheet will break safely in small pieces. If the cooling step is less strong, the glass will then simply be heat-strengthened and in any case offer a better mechanical resistance.

Further heat treatment may be implied in process steps like 1) bending, 2) tempering, 3) sintering of colored ceramic print or silver bus bar print, 4) vacuum sealing of vacuum double glazing and 5) calcination of a wet-coated low reflective coating or antiglare coating.

A first method to prepare a double side coated substrate comprises, in sequence, at least the steps of:

1. Providing for a transparent substrate having two major opposing first and second surfaces, wherein the first surface is exposed,
2. Depositing a first functional coating on at least a part of the first surface of the transparent substrate,
3. Depositing, above and in contact with the first functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,

- from 25 to 80 at% zirconium,

for a total of 100 at% of the metals, and
wherein the topcoat has a thickness from 0.1 to 10 nm,

4. Flipping the substrate such as to expose the second surface,
5. Depositing a second functional coating on at least a part of the second surface of the transparent substrate, to provide for a double side coated transparent substrate,
6. Optionally depositing a second topcoat,
7. Optionally submitting the double side coated transparent substrate to a heat treatment.

A second method to prepare a double side coated substrate comprises, in sequence, at least the steps of:

1. Providing for a transparent substrate having two major opposing first and second surfaces, wherein the first surface is exposed,
2. Depositing a first functional coating on at least a part of the first surface of the transparent substrate,
3. Depositing, above and in contact with the first functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

4. Flipping the substrate such as to expose the second surface,
5. Depositing a second functional coating on at least a part of the second surface of the transparent substrate, to provide for a double side coated transparent substrate,
6. Optionally depositing, above and in contact with the second functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

7. Optionally submitting the double side coated transparent substrate to a heat treatment.

Such first and second methods may thus provide for a transparent substrate provided with a first functional coating on at least a part of a first surface, and a second functional coating on at least a part of the second surface, wherein at least one of the first or second functional coating is provided with a topcoat as described herein.
In such circumstances, the first and second functional coatings may be the same or different, selected, among others, from the functional coatings described above.
The present topcoat finds further usefulness in that it provides the functional coating with sufficient mechanical durability to allow for the coating of the transparent substrate on the second opposite surface.
In some instances, compatible with other methods described above, a step of heat treatment may be effected before or after the flipping step, that is, the coated transparent substrate may be subjected to heat treatment before being provided with the second functional coating.
The invention thus also provides for a heat treated coated glazing comprising a functional coating and a magnetron sputtered mixed metal oxide topcoat comprising at least titanium, zirconium and silicon, wherein the topcoat

comprises at least $SiO_x$, $TiO_y$, and $ZrO_z$ wherein x, y, z range from 1.8 to 2.2,

wherein the topcoat comprises

- from 10 to 65 at% silicon,
- from 8 to 38 at% titanium,
- from 25 to 80 at% zirconium,

for a total of 100 at% of the metals including impurities, and
wherein the topcoat has a thickness from 0.1 to 10 nm.

When the coated substrate can withstand a heat-treatment of the type tempering or bending without losing the optical and/or energetical properties for which they have been manufactured, said functional coating and/or the coated substrate may be called "heat-treatable" or "temperable".

In some instances, the functional coating may be "self-matchable". This means there is no or only few change in the optical and/or energetical properties, when the coated substrate undergoes a heat treatment of the type tempering or bending.

The CIELAB 1976 values (L\*a\*b\*) are typically used to define the tints of the coated substrates. They are measured with illuminant D65/10°. $\Delta E^* \text{ (Delta E*)} = \sqrt{(\Delta L^*)^2 + (\Delta a^*)^2 + (\Delta b^*)^2}$ represents the tint variation during the heat treatment, i.e. the difference between before and after heat treatment colors.

"Self-matchability" may be considered when $\Delta E^* \leq 5$, alternatively $\leq 2$ in transmission and in reflection and/or when there is no or little change in light transmission and reflection and energy values, that is, the difference between the values before and after heat treatment remains $\leq 5$, alternatively $\leq 2$, in single glazing.

The present topcoat does not alter the self-matchability of the functional coating positioned underneath it, when such functional coating is self-matchable.

This has for advantage that non-heat treated and heat treated products can be placed next to each other for the same application, e.g. within a building façade. This also has the advantage that the topcoat may be provided only on the product to be heat treated or only on the product which will not be heat treated, while self-matchability as defined, will be ensured between the non-heat treated and heat treated products.

The present topcoat is considered to be in contact with the surrounding environment, furthest away from the substrate. In only specific instances, compatible with other instances of the invention, may the coated substrate be further provided with at least one temporary protective layer over and in contact with the topcoat. Such "temporary" protective layer is typically removed upon washing or upon heat treatment of the substrate, as will be explained below.

In certain embodiments of the invention, temporary protective layers include carbon temporary protective layers, polymeric temporary protective layers, peelable protective layers.

Carbon protective layers include those layers provided by magnetron sputtering, usually having a thickness from 0.5 to 15 nm, alternatively from 1 to 10 nm, alternatively from 1 to 7 nm, and any value in-between. Such carbon protective coating is typically removed upon heat treatment of the transparent substrate, and thus eliminated at a rate of 99 - 100%, as may be measured by colorimetric methods.

Polymeric temporary protective layers include those layers provided by the evaporation or reaction product of polymeric coating compositions containing polyvinyl alcohol, polyethylene, acrylic, or the like, which may be subsequently removed by aqueous washing, solvent washing, steam removal, thermal decomposition or combustion. Such polymeric coating compositions may be liquid solution, emulsion, suspension, slurry, or dispersion.

Peelable protective layers include those coatings formed from polyamide liquid compositions, or the like.

The temporary protective coating may thus be removed by washing, combustion, thermal decomposition, or peeling. The substrate can be processed, e.g., cut, trimmed, bent, shaped, and/or incorporated into a production article, before or after removal of the temporary protective coating.

Any of the above method may thus additionally comprise a step of depositing a carbon layer on the coated substrate.

A carbon protective topcoat has the advantage that is may also be deposited by a sputtering method, and may therefore be included in the same processing line without major technical constraint.

The present invention provides for a multiple glazing unit comprising at least one coated substrate as described in the various above embodiments.

The multiple glazing units include double or triple glazing or laminated glazing, wherein the coated substrate is associated with one or more other glass sheet(s), coated or not. The coated surface of the glazing may be positioned in contact with the space between two sheets of glass, in the case of multiple glazing, or in contact with the adhesive layer, in the case of laminated glazing (P2 or P3).

Given its mechanical and chemical resistance, the coated surface of the coated substrate does not always need edge deletion prior to assembly into a multiple glazing unit and may even reach sufficient mechanical and chemical resistance to be positioned on an external surface of a multiple glazing unit, that is, facing and in contact with the exterior environment or interior environment of the building or vehicle (P1 or P4). The stack of thin layers may thus be provided on the surface of the glass substrate facing the interior of a building or vehicle (P2 of a single, non-laminated glass sheet, or P4 of a laminated glass or double glazing unit). In some instances, the coating stack may be positioned in contact with the exterior (P1).

The coated substrate of the present invention may be useful in architectural glazings (door, window, vitrine, insulating glass (IG) window units, etc.), appliance applications (fridge door, oven door, etc.), and transportation applications (vehicle windows, skylights, windshield, side windows), where there is increasing need to have glasses with very pronounced curvatures and/or of complex shape (double curvature, S-shaped curvature, etc.).

In some instances, the coated substrate may be tempered. As a result of its safety and strength, tempered glass is used in a variety of demanding applications, including windows, shower doors, architectural glass doors and tables, refrigerator trays, as a component of bulletproof glass, and various types of plates and cookware.

The present coated substrate is thus highly durable, that is, is able to withstand certain chemical and/or mechanical tests detailed below, in some instances, both before and after an optional heat treatment. Optical parameters may be optimized without departing from the durability achieved by the functional coating applied on the presently claimed coated substrates.

"Chemical durability" or "chemically durable" is used herein synonymously with the term of art "chemical stability" or "chemically resistant".

"Mechanical durability" or " mechanically durable" is used herein synonymously with the term of art "mechanical stability" or " mechanically resistant".

The present invention provides for the use of a topcoat for a transparent substrate provided with a functional coating, wherein the topcoat is a magnetron sputtered mixed metal oxide comprising at least $SiO_x$, $TiO_y$, and $ZrO_z$ wherein x, y, z range from 1.8 to 2.2,

wherein the topcoat comprises

- from 10 to 65 at% silicon,
- from 8 to 38 at% titanium,
- from 25 to 80 at% zirconium,

for a total of 100 at% of the metals including impurities, and wherein the topcoat has a thickness from 0.1 to 10 nm; to improve durability by increasing the abrasion resistance by at least 10%, alternatively by at least 20%, alternatively by at least 40%.

In some embodiments of the present use, compatible with other embodiments of the present invention, the above ranges for the Si, Ti, and Zr in the topcoat may independently vary for one from the other. The amount of Si may alternatively range from 15 to 60 at%. The amount of Ti may alternatively range from 10 to 35 at%. The amount of Zr may alternatively range from 30 to 70 at%. These amounts may thus vary independently for each metal, provided the total is 100 at% of the metal, including impurities.

## EXAMPLES

Mechanical stability was evaluated per the following abrasion test method, well known by the skilled person in the art.

Other tests for chemical durability have been run, such as the Cleveland test (3, 7 and 10 days), the Climatic chamber test (3, 7 and 10 days), the Salt fog test (2, 5 and 10 days). The results are not outlined in details, as they are equivalent to standard results obtained with top layers such as those of comparative examples 1 and 2 below.

Typical tests for mechanical durability have been run, such as the Automatic Wet Rub Test (AWRT - 10, 50, 100, 250, 500 and 1000 cycles) or the Dry brush test (250, 500 cycles). The results are not outlined in details, as they are all passed successfully, leading to the present Abrasion test, inflicting harsher abrasion conditions.

The emissivity and the aesthetics of the functional coating were measured, but are also not provided as they were not impacted by the present topcoat. Optical properties remain within an acceptable variation, with Delta T < 2%, Delta R < 2%, and Delta E < 5, as measured using D65/10° Illuminant or D65/2° Illuminant, when compared with the functional coating without the topcoat.

Abrasion Test

The abrasion test is a dry rub test performed as described in standard ISO11998:1998, using an abrasive pad of 900 g, for at least 1000 cycles. For the present invention the cycles are performed on a dry sample, without addition of any liquid.

This test may also be carried out on samples after they have been subjected to heat treatment (here referred to as "bake"). Typical test carried out take account of at least 250 cycles.

The results for the test are obtained by visually assessing samples in comparison with a defined scale of reference samples. An internal scale is set up for the abrasion test, ranging from 0 to 10, with acceptable values from 7 to 10. One value is typically the average of at least 3 samples for one experiment. Comparative examples in the tables below were prepared along the examples according to the invention as internal verification of the procedure for each "run" of experiment (set up in the below Tables).

The present abrasion test is providing for harsher and more abrasive conditions than a typical AWRT or dry brush test known in the art.

The transparent substrate used in the present examples of glazing provided with a stack of thin layers stacks was standard float soda-lime, clear, 4 mm thickness, thoroughly cleaned before any coating deposition.

The heat treatment conditions (or bake conditions) involve placing the sample inside a convection furnace at a temperature of 670°C during 4 to 5 minutes.

In the following tables:

- Ag represents silver
- AZO2% represents a layer of aluminium doped zin oxide provided from a ceramic target comprising zinc oxide doped with 2%wt aluminium oxide
- SiN represents a layer of silicon nitride $Si_3N_4$
- TiO is a layer of substoechiometric titanium oxide, provided from a ceramic target of $TiO_n$ with n equal to 1.65 up to 1.85.
- TZO is a layer of titanium zirconium mixed oxide, provided from a ceramic target of $TiZrO_x$ composed of $TiO_x/ZrO_2$ with proportions of 65 wt% $TiO_2$ and 35 wt% $ZrO_2$ (providing for 74 at% Ti and 26 at% Zr )ZnO represents a layer of zinc oxide without dopant, provided from a zinc metallic target
- ZSO5 represents a layer of zinc-tin mixed provided from a metallic target comprising Zn at 52 wt% and Sn at 48 wt%
- ZTAO as barrier layer (above and in contact with a silver layer) is a layer of zinc-titanium-aluminium oxide, provided from a ceramic target composed of ZnO: $TiO_x:Al_2O_3$ in proportions of ZnO 85-95% wt, $TiO_x$ 5-15% wt and $Al_2O_3$ 1.5-3 wt%, providing for composition of Zn:Ti:Al of 86.3:10.4:3.3 at% in the contact layer
- ZTAO as seed layer (under and in contact with a silver layer) is a layer of zinc-titanium-aluminium oxide, provided from a metallic target in proportions of Zn 88.8 wt%, Ti 9.5 wt% and Al 1.7 wt%

Unless otherwise indicated, standard deposition methods for the seed layers are based on a gas flow of a 80/20 mixture of oxygen and argon. Silicon nitride was sputtered in a gas flow of a mixture of argon and $N_2$ with enough $N_2$ to provide for a fully stoichiometric $Si_3N_4$.

Unless otherwise indicated, all thickness may have a thickness variation < 5%.

Examples 1 to 8 correspond to the sixth example of multiple layer coatings comprising IR layers discussed above. Example 9 corresponds to the seventh example of multiple layer coatings comprising IR layers discussed above.

### Examples 1 to 4 - Comparative examples C1 to C4

The following stack was provided:
Glass/ZSO5 (25.4nm)/ZTAO (9.0 nm)/Ag (18.0 nm)/ ZTAO (5.0 nm)/ZSO5 (16.5 nm)/SiN (20.0 nm)/ topcoat (5.0 nm).

In Examples 1 to 4, the topcoats were prepared according to one embodiment of the invention, using the co-sputtering of a ceramic target of 65 wt% TiOy and 35 wt% ZrOz and a ceramic target of Si-$ZrO_2$ in proportions of 65-35 wt%, to provide for a topcoat comprising Si, Ti and Zr in varying amounts of atomic %, as provided in Table 1, within the ranges as claimed, wherein x, y, z range from 1.8 to 2.2.

In Comparative Examples 1 to 4, the topcoats were prepared such that the topcoat comprised Si, Ti and Zr in varying amounts of atomic %, as provided in Table 1, outside the ranges as claimed.

Results for the various tests are provided in Table 1 (average values for multiple repeated trials for each Example and Comparative example). Results clearly indicate that Examples 1 to 4 were better than Comparative examples C1 to C4 in terms of mechanical resistance, having values for the Abrasion test $\geq$ 7 both before and after bake.

Comparative example 1 was a typical TiZrO topcoat as provided in the art (0 at% Si), sputtered using a ceramic target of 65 wt% TiOy and 35 wt% ZrOz, which had values < 6.

Comparative example 2 was a SiZrO topcoat (0 at% Ti) using a ceramic target of Si-ZrO$_2$ in proportions of 65-35 wt%, which had values < 6.

Comparative examples 3 and 4 were provided with a topcoat having Zr at less than 25 at% (and Si at more than 65 at% for Comparative example 3), which had values < 8 without bake and values ≤ 6 after bake.

The present amounts of each of Si, Ti and Zr in the mixed metal oxide topcoat allow to significantly improve the performance of the topcoat with regard to abrasion resistance, up to levels which had not been achieved previously, both before and after bake.

The abrasion resistance is paired with equivalent performances for all chemical durability tests, and that, without any negative impact on the optical performances of the coating. The topcoat improves the durability by increasing the abrasion resistance of Examples 1 to 4 vs Comparative example 1 as indicated in Table 1 (abrasion resistance without bake).

**TABLE 1**

|  | Si (at%) | Ti (at%) | Zr (at%) | Abrasion resistance | Abrasion resistance after bake | % increase in abrasion resistance |
|---|---|---|---|---|---|---|
| Example 1: SiTiZrO | 54.2 | 10.9 | 34.9 | **9.0** | **8.8** | 80% |
| Example 2: SiTiZrO | 49.3 | 12.5 | 38.2 | **8.8** | **8.8** | 76% |
| Example 3: SiTiZrO | 43.7 | 14.3 | 42.1 | **9.0** | **7.0** | 80% |
| Example 4: SiTiZrO | 37.3 | 16.2 | 46.4 | **8.5** | **7.0** | 70% |
| Comparative Example 1 | 0.0 | 74.1 | 25.9 | 5.0 | 4.5 | - |
| Comparative Example 2 | 89.1 | 0.0 | 10.9 | 5.5 | 4.5 | - |
| Comparative Example 3 | 69.5 | 16.3 | 14.2 | **7.8** | 6.0 | 56% |
| Comparative Example 4 | 62.6 | 22.0 | 15.4 | **7.5** | 5.5 | 50% |

## Example 5 - Comparative example C5

The following stack was provided:
Glass/ZSO5 (24.5 nm)/ZnO (5.0 nm)/Ag (17.0 nm)/ AZO (7.0 nm)/ZSO5 (21.0 nm)/SiN (22.0 nm)/ topcoat (4.0 nm).

In Example 5, the topcoat was prepared according to one embodiment of the invention, using the sputtering of a ceramic target of 18.5 wt% TiOy, 70.4 wt% ZrOz and 11 wt% metallic Si (with (Y$_2$O$_3$) impurities present in the target), to provide for a topcoat comprising 33.0 at% Si, 19.3 at% Ti and 47.7 at% Zr, within the ranges as claimed, wherein x, y, z range from 1.8 to 2.2.

In Comparative example 5, the topcoat was a typical TiZrO topcoat as provided in the art (0 at% Si), sputtered using a ceramic target of 65 wt% TiOy and 35 wt% ZrOz.

Results for the various tests are provided in Table 2 (average values for multiple repeated trials for each example and Comparative example). Results clearly indicate that the glazing of Example 5 possesses the best mechanical resistance. The topcoat improves the durability by increasing the abrasion resistance by 41.7% (8.5 vs 6.0) without any negative impact on the optical performances of the coating.

**TABLE 2**

|  | Si (at%) | Ti (at%) | Zr (at%) | Abrasion resistance | Abrasion resistance after bake |
|---|---|---|---|---|---|
| Example 5: SiTiZrO | 33.0 | 19.3 | 47.7 | **8.5** | **8.2** |
| Comparative Example 5: TZO | 0.0 | 74.1 | 25.9 | 6.0 | 5.5 |

## Example 6 - Comparative example C6

The following stack was provided:
Glass/TiO (19.0 nm)/ZTAO (9.0 nm)/Ag (12.0 nm)/ ZTAO (5.0 nm)/ZSO5 (18.0 nm)/SiN (18.0 nm)/ topcoat (5.0 nm)

In Example 6, the topcoat was prepared according to one embodiment of the invention, using the co-sputtering of a ceramic target of 65 wt% TiOy and 35 wt% ZrOz and a ceramic target of Si-ZrO$_2$ in proportions of 65-35 wt%, to provide for a topcoat comprising Si, Ti and Zr in amounts of atomic %, as provided in Table 3, within the ranges as claimed, wherein x, y, z range from 1.8 to 2.2.

In Comparative example 6, the topcoat was a typical TiZrO topcoat as provided in the art (0 at% Si), sputtered using a ceramic target of 65 wt% TiOy and 35 wt% ZrOz.

Results for the various tests are provided in Table 3 (average values for multiple repeated trials for each example and Comparative example). Results clearly indicate that the glazing of Example 6 possesses the best mechanical resistance. The topcoat improves the durability by increasing the abrasion resistance by 87.5% (9.0 vs 4.8) without any negative impact on the optical performances of the coating.

**TABLE 3**

|  | Si (at%) | Ti (at%) | Zr (at%) | Abrasion resistance |
|---|---|---|---|---|
| Example 6: SiTiZrO | 49.3 | 12.5 | 38.2 | **9.0** |
| Comparative Example 6: TZO | 0.0 | 74.1 | 25.9 | 4.8 |

### Example 7 - Comparative example C7

The following stack was provided:

Glass/TiO (23.0 nm)/ZnO (5.0 nm)/Ag (12.0 nm)/ AZO (5.0 nm)/ZSO5 (16.0 nm)/SiN (18.0 nm)/ topcoat (4.0 nm)

In Example 7, the topcoat was prepared according to one embodiment of the invention, using the sputtering of a ceramic target of 18.5 wt% TiOx, 70.4 wt% ZrOx and 11 wt% metallic Si (with ($Y_2O_3$) impurities present in the target), to provide for a topcoat comprising 33.0 at% Si, 19.3 at% Ti and 47.7 at% Zr, within the ranges as claimed, wherein x, y, z range from 1.8 to 2.2.

In Comparative example 7, the topcoat was a typical TiZrO topcoat as provided in the art (0 at% Si), sputtered using a ceramic target of 65 wt% TiOy and 35 wt% ZrOz.

Results for the various tests are provided in Table 4 (average values for multiple repeated trials for each example and Comparative example). Results clearly indicate that the glazing of Example 7 possesses the best mechanical resistance. The topcoat improves the durability by increasing the abrasion resistance by 73.6% (9.2 vs 5.3) without any negative impact on the optical performances of the coating.

**TABLE 4**

|  | Si (at%) | Ti (at%) | Zr (at%) | Abrasion resistance |
|---|---|---|---|---|
| Example 7: SiTiZrO | 33.0 | 19.3 | 47.7 | **9.2** |
| Comparative Example 7: TZO | 0.0 | 74.1 | 25.9 | 5.3 |

### Example 8 - Comparative example C8

The following stack was provided:

Glass/ZSO5 (17.0 nm)/TZO (16.6 nm)/ZnO (5.0 nm)/Ag (10.0 nm)/ AZO (7.0 nm)/ZSO5 (16.0 nm)/SiN (17.0 nm)/ topcoat (4.0 nm)

In Example 8, the topcoat was prepared according to one embodiment of the invention, using the sputtering of a ceramic target of 18.5 wt% TiOy, 70.4 wt% ZrOz and 11 wt% metallic Si (with ($Y_2O_3$) impurities present in the target), to provide for a topcoat comprising 33.0 at% Si, 19.3 at% Ti and 47.7 at% Zr, within the ranges as claimed, wherein x, y, z range from 1.8 to 2.2.

In Comparative example 8, the topcoat was a typical TiZrO topcoat as provided in the art (0 at% Si), sputtered using a ceramic target of 65 wt% TiOy and 35 wt% ZrOz.

Results for the various tests are provided in Table 5 (average values for multiple repeated trials for each example and Comparative example). Results clearly indicate that the glazing of Example 8 possesses the best mechanical resistance. The topcoat improves the durability by increasing the abrasion resistance by 24.3% (9.2 vs 7.4) without any negative impact on the optical performances of the coating.

**TABLE 5**

| | Si (at%) | Ti (at%) | Zr (at%) | Abrasion resistance | Abrasion resistance after bake |
|---|---|---|---|---|---|
| Example 8: SiTiZrO | 33.0 | 19.3 | 47.7 | **9.2** | **9.1** |
| Comparative Example 8: TZO | 0.0 | 74.1 | 25.9 | 7.4 | 7.0 |

**Example 9 - Comparative example C9**

The following stack was provided:
Glass/ZSO5 (36.9 nm)/ ZnO (5.0 nm)/Ag (12.9 nm)/ AZO (7.0 nm)/ZSO5 (21.0 nm)/SiN (36.7 nm)/ ZSO5 (21.0 nm)/ ZnO (5.0 nm)/Ag (13.8 nm)/ AZO (7.0 nm)/ZSO5 (7.7 nm)/SiN (20.0 nm)/topcoat (4 nm)

In Example 9, the topcoat was prepared according to one embodiment of the invention, using the sputtering of a ceramic target of 18.5 wt% TiOy, 70.4 wt% ZrOz and 11 wt% metallic Si (with $(Y_2O_3)$ impurities present in the target), to provide for a topcoat comprising 33.0 at% Si, 19.3 at% Ti and 47.7 at% Zr, within the ranges as claimed, wherein x, y, z range from 1.8 to 2.2.

In Comparative example 9, the topcoat was a typical TiZrO topcoat as provided in the art (0 at% Si), sputtered using a ceramic target of 65 wt% TiOy and 35 wt% ZrOz.

Results for the various tests are provided in Table 6 (average values for multiple repeated trials for each example and Comparative example). Results clearly indicate that the glazing of Example 9 possesses the best mechanical resistance. The topcoat improves the durability by increasing the abrasion resistance by 55.9% (9.2 vs 5.9) without any negative impact on the optical performances of the coating.

**TABLE 6**

| | Si (at%) | Ti (at%) | Zr (at%) | Abrasion resistance | Abrasion resistance after bake |
|---|---|---|---|---|---|
| Example 9: SiTiZrO | 33.0 | 19.3 | 47.7 | **9.2** | **9.1** |
| Comparative Example 9: TZO | 0.0 | 74.1 | 25.9 | 5.9 | 4.9 |

**Examples 10 and 11** - **Comparative example C10**

The following stack was provided for Comparative Example C10:
Glass/ZSO5 (38.5 nm)/ ZnO:Al (3.0 nm)/Ag (9.5 nm)/ AZO (5.0 nm)/ZSO5 (16.0 nm)/SiN (22.0 nm)/ TZO (3.0 nm) with TZO being as provided in the art (0 at% Si), sputtered using a ceramic target of 65 wt% TiOy and 35 wt% ZrOz.

The following stack was provided for Example 10:
Glass/ZSO5 (38.5 nm)/ ZnO:Al (3.0 nm)/Ag (9.5 nm)/ AZO (5.0 nm)/ZSO5 (16.0 nm)/SiN (22.0 nm)/ topcoat (3 nm) with the topcoat prepared according to one embodiment of the invention, using the sputtering of a ceramic target of 18.5 wt% TiOy, 70.4 wt% ZrOz and 11 wt% metallic Si (with $(Y_2O_3)$ impurities present in the target), to provide for a topcoat comprising 33.0 at% Si, 19.3 at% Ti and 47.7 at% Zr, within the ranges as claimed, wherein x, y, z range from 1.8 to 2.2.

The following stack was provided for Example 11:
Glass/ZSO5 (38.5 nm)/ ZnO:Al (3.0 nm)/Ag (9.5 nm)/ AZO (5.0 nm)/ZSO5 (16.0 nm)/SiN (22.0 nm)/ TZO (3.0 nm) / topcoat (3 nm)

In Example 11, the TZO was as provided in the art (0 at% Si), sputtered using a ceramic target of 65 wt% TiOy and 35 wt% ZrOz and the topcoat was prepared according to one embodiment of the invention, using the sputtering of a ceramic target of 18.5 wt% TiOy, 70.4 wt% ZrOz and 11 wt% metallic Si (with $(Y_2O_3)$ impurities present in the target), to provide for a topcoat comprising 33.0 at% Si, 19.3 at% Ti and 47.7 at% Zr, within the ranges as claimed, wherein x, y, z range from 1.8 to 2.2.

Example 10 is thus an alternative version of Comparative example C10, where the TZO initial topcoat of Comparative example C10 was replaced by the present topcoat of mixed oxide of Si, Ti, Zr, while Example 11 is a version of Comparative example C10 provided with the present topcoat of mixed oxide of Si, Ti, Zr on top of the initial TZO topcoat.

Colorimetric results in Table 7 indicate the light transmission values and color difference remain in an acceptable range, with Delta T < 2%, Delta R < 2%, and Delta E < 5.

Results also indicated the superior mechanical resistance of the mixed oxide of Si, Ti, Zr topcoat over the typical TZO topcoat of Comparative example C10.

TABLE 7

| | Comparative example 10 | Example 10 | Example 11 |
|---|---|---|---|
| Transmission | | | |
| T/D65/2° | 88,28 | 88,42 | 87,42 |
| L*/D65/10° | 95,22 | 95,28 | 94,83 |
| a*/D65/10° | -0,76 | -0,74 | -0,77 |
| b*/D65/10° | 2,69 | 2,43 | 3,49 |
| Glass side reflection | | | |
| Rg/D65/2° | 6,22 | 5,89 | 7,40 |
| L*/D65/10° | 30,26 | 29,42 | 33,06 |
| a*/D65/10° | -1,64 | -1,63 | -1,75 |
| b*/D65/10° | -9,23 | -8,48 | -10,40 |
| Coated side reflection | | | |
| Rc/D65/2° | 4,94 | 4,73 | 5,79 |
| L*/D65/10° | 26,88 | 26,24 | 29,31 |
| a*/D65/10° | -0,75 | -0,91 | -0,57 |
| b*/D65/10° | -10,57 | -9,24 | -13,30 |
| | | Delta Ex10 vc C10 | Delta Ex11 vc C10 |
| Delta T (%) | | -0,13 | 0,86 |
| Delta E (T) | | 0,27 | 0,89 |
| Delta Rg (%) | | 0,33 | -1,18 |
| Delta E (Rg) | | 1,13 | 3,03 |
| Delta Rc (%) | | 0,21 | -0,85 |
| Delta E (Rc) | | 1,48 | 3,66 |
| Abrasion resistance | 5.3 | 9.0 | 9.2 |
| Abrasion resistance after bake | 4.8 | 9.1 | 9.3 |

**Claims**

1. A coated substrate comprising a transparent substrate having two major opposing first and second surfaces, wherein at least one surface is provided with a functional coating, **characterized in that** the transparent substrate is provided, above and in contact with the functional coating, with a magnetron sputtered topcoat of a mixed metal oxide comprising at least $SiO_x$, $TiO_y$, and $ZrO_z$ wherein x, y, z range from 1.8 to 2.2,

   wherein the topcoat comprises

   - from 10 to 65 at% silicon,
   - from 8 to 38 at% titanium,
   - from 25 to 80 at% zirconium,

   for a total of 100 at% of the metals, and
   wherein the topcoat has a thickness from 0.1 to 10 nm.

2. The coated substrate of claim 1, wherein the mixed metal oxide of the topcoat comprises from 15 to 60 at% of silicon.

3. The coated substrate of claim 1, wherein the mixed metal oxide of the topcoat comprises from 10 to 35 at% of titanium.

4. The coated substrate of claim 1, wherein the mixed metal oxide of the topcoat comprises from 25 to 70 at% of zirconium.

5. The coated substrate of any one of the preceding claims, wherein the functional coating is a solar control coating, a conductive coating, an antireflective coating, a decorative coating and/or a low emissivity coating.

6. The coated substrate of any one of the preceding claims, wherein the functional coating is a single layer metal oxide coating, a multiple layer metal oxide coating, a non-metal oxide coating, or a multiple layer coating.

7. The coated substrate of claim 6, wherein the single layer metal oxide coating comprises a zinc oxide doped with aluminium, gallium or hafnium; a mixed metal oxide of zinc and tin; tin oxide possibly doped with fluor or antimony; indium oxide possibly doped with tin; or the like.

8. The coated substrate of claim 6, wherein the multiple layer metal oxide coatings comprises at least one layer of high refractive index material, and at least one layer of low refractive index material.

9. The coated substrate of claim 6, wherein the multiple layer coating comprises an alternating arrangement of n infrared reflective (IR) layers and n + 1 dielectric layers, with $n \geq 1$, such that each IR layer is surrounded by two dielectric layers.

10. The coated substrate of claim 9, wherein the multiple layer coating comprises

   a. at least one silver layer, and a sequence : substrate/MeO/ZnO:AlSi/Ag/AlSi-MeO where MeO is a metallic oxide such as $SnO_2$, $TiO_2$, $In_2O_3$, $Bi_2O_3$, $ZrO_2$, $Ta_2O_5$, $SiO_2$ or $Al_2O_3$ or a mixture thereof;
   or
   b. a first dielectric layer including silicon nitride; first Ni or NiCr inclusive layer; an infrared (IR) reflecting layer comprising silver; a second Ni or NiCr inclusive layer; and a second dielectric layer including silicon nitride;
   or
   c. an infrared (IR) reflecting layer contacting and sandwiched between first and second layers, said second layer comprising NiCrOx; and wherein at least said second layer comprising NiCrOx is oxidation graded so that a first portion of said second layer close to said infrared (IR) reflecting layer is less oxidized than a second portion of said second layer that is further from said infrared (IR) reflecting layer;
   or
   d. a dielectric layer; a first layer comprising zinc oxide located over the dielectric layer; an infrared (IR) reflecting layer comprising silver located over and contacting the first layer comprising zinc oxide; a layer comprising an oxide of NiCr located over and contacting the IR reflecting layer; a second layer comprising zinc oxide located over and contacting the layer comprising the oxide of NiCr; and another dielectric layer located over the second layer comprising zinc oxide;
   or
   e. a first dielectric layer; a first infrared (IR) reflecting layer comprising silver located over at least the first dielectric layer; a first layer comprising zinc oxide located over at least the first IR reflecting layer and the first dielectric layer; a second IR reflecting layer comprising silver located over and contacting the first layer comprising zinc oxide; a layer comprising an oxide of NiCr located over and contacting the second IR reflecting layer; a second layer comprising zinc oxide located over and contacting the layer comprising the oxide of NiCr; and another dielectric layer located over at least the second layer; comprising zinc oxide;
   or
   f. a first dielectric layer; a first layer comprising zinc oxide located over the dielectric layer; an infrared (IR) reflecting layer comprising silver located over and contacting the first layer comprising zinc oxide; a second layer comprising zinc oxide located over the IR layer; and a second dielectric layer located over the second layer comprising zinc oxide;
   or
   g. a first dielectric layer; a first IR layer comprising silver; a second dielectric layer; a second IR layer; a third dielectric layer, wherein the first, second and third dielectric layers may comprise several layers;
   or
   h. a first dielectric layer; a first IR layer comprising silver; a second dielectric layer; a second IR layer; a third dielectric layer; a third IR layer; a fourth dielectric layer, wherein the first, second, third and fourth dielectric layers may comprise several layers.

11. The coated substrate of any one of the preceding claims, with a first functional coating on at least a part of a first surface, and a second functional coating on at least a part of the second surface, wherein at least one of the first or second functional coating is provided with a topcoat according to anyone of claim 1 to 10.

12. The coated substrate of anyone of claims 1 to 11, further provided with at least one temporary protective layer, such as carbon temporary protective layers, polymeric temporary protective layers, peelable protective layers, above and in contact with the magnetron sputtered topcoat of a mixed metal oxide.

13. A heat treated coated substrate comprising a transparent substrate having two opposite surfaces, wherein at least one surface is provided with a functional coating, **characterized in that** the transparent substrate is provided, above and in contact with the functional coating, with a magnetron sputtered topcoat of a mixed metal oxide comprising at least $SiO_x$, $TiO_y$, and $ZrO_z$ wherein x, y, z range from 1.8 to 2.2,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm.

14. A multiple glazing unit comprising at least one coated substrate according to anyone of claims 1 to 12.

15. A method to prepare a coated substrate comprising, in sequence, at least the steps of:

1. Providing for a transparent substrate having two major opposing first and second surfaces,
2. Depositing a functional coating on at least a part of the first surface of the transparent substrate,
3. Depositing, above and in contact with the functional coating, a topcoat comprising a mixed metal oxide comprising at least $SiO_x$, $TiO_y$, and $ZrO_z$ wherein x, y, z range from 1.8 to 2.2, by a magnetron sputtering technique,
wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm.

16. A method to prepare a heat treated coated substrate comprising, in sequence, at least the steps of:

1. Providing for a transparent substrate having two major opposing first and second surfaces,
2. Depositing a functional coating on at least a part of the first surface of the transparent substrate,
3. Depositing, above and in contact with the functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

4. Submitting the coated substrate to a heat treatment.

17. A method to prepare a double side coated substrate comprising, in sequence, at least the steps of:

1. Providing for a transparent substrate having two major opposing first and second surfaces, wherein the first surface is exposed,

2. Depositing a first functional coating on at least a part of the first surface of the transparent substrate,

3. Depositing, above and in contact with the first functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

4. Flipping the substrate such as to expose the second surface,

5. Depositing a second functional coating on at least a part of the second surface of the transparent substrate, to provide for a double side coated transparent substrate,

6. Optionally depositing, above and in contact with the second functional coating, a topcoat comprising a mixed metal oxide comprising at least $SiO_x$, $TiO_y$, and $ZrO_z$ wherein x, y, z range from 1.8 to 2.2, by a magnetron sputtering technique,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm,

7. Optionally submitting the double side coated transparent substrate to a heat treatment.

18. A method according to anyone of claims 15 to 17, wherein the deposition of the topcoat comprising at least silicon, titanium and zirconium, by a magnetron sputtering technique is effected using either metallic or ceramic targets to provide for the at least three titanium, zirconium or silicon elements.

19. The method according to anyone of claims 15 to 17, wherein the deposition of the topcoat comprising at least silicon, titanium and zirconium, by a magnetron sputtering technique is effected using a ceramic target comprising the oxides of titanium and zirconium, and a metallic form of silicon.

20. Use of a topcoat for a transparent substrate provided with a functional coating, wherein the topcoat is a magnetron sputtered mixed metal oxide comprising at least $SiO_x$, $TiO_y$, and $ZrO_z$ wherein x, y, z range from 1.8 to 2.2,

wherein the topcoat comprises

- from 10 to 65 at% silicon,
- from 8 to 38 at% titanium,
- from 25 to 80 at% zirconium,

for a total of 100 at% of the metals, and
wherein the topcoat has a thickness from 0.1 to 10 nm;
to improve durability by increasing the abrasion resistance by at least 10%.

**Patentansprüche**

1. Beschichtetes Substrat, umfassend ein transparentes Substrat mit zwei gegenüberliegenden, ersten und zweiten, Hauptoberflächen, wobei wenigstens eine Oberfläche mit einer Funktionsbeschichtung versehen ist,

   **dadurch gekennzeichnet, dass** das transparente Substrat über und in Kontakt mit der Funktionsbeschichtung mit einer Magnetron-gesputterten Deckschicht aus einem Mischmetalloxid umfassend wenigstens $SiO_x$, $TiO_y$ und $ZrO_z$, wobei x, y, z in dem Bereich von 1,8 bis 2,2 liegen, versehen ist,
   wobei die Deckschicht umfasst

   - von 10 bis 65 At.-% Silicium,
   - von 8 bis 38 At.-% Titan,
   - von 25 bis 80 At.-% Zirkonium,

   mit insgesamt 100 At.-% der Metalle, und
   wobei die Deckschicht eine Dicke von 0,1 bis 10 nm aufweist.

2. Beschichtetes Substrat nach Anspruch 1, wobei das Mischmetalloxid der Deckschicht von 15 bis 60 At.-% Silicium umfasst.

3. Beschichtetes Substrat nach Anspruch 1, wobei das Mischmetalloxid der Deckschicht von 10 bis 35 At.-% Titan umfasst.

4. Beschichtetes Substrat nach Anspruch 1, wobei das Mischmetalloxid der Deckschicht von 25 bis 70 At.-% Zirkonium umfasst.

5. Beschichtetes Substrat nach einem der vorstehenden Ansprüche, wobei die Funktionsbeschichtung eine Sonnenschutzbeschichtung, eine leitfähige Beschichtung, eine Antireflexbeschichtung, eine dekorative Beschichtung und/oder eine Beschichtung mit niedrigem Emissionsvermögen ist.

6. Beschichtetes Substrat nach einem der vorstehenden Ansprüche, wobei die Funktionsbeschichtung eine einschichtige Metalloxidbeschichtung, eine mehrschichtige Metalloxidbeschichtung, eine Nicht-Metalloxidbeschichtung oder eine mehrschichtige Beschichtung ist.

7. Beschichtetes Substrat nach Anspruch 6, wobei die einschichtige Metalloxidbeschichtung ein mit Aluminium, Gallium oder Hafnium dotiertes Zinkoxid; ein Mischmetalloxid von Zink und Zinn; gegebenenfalls mit Fluor oder Antimon dotiertes Zinnoxid; gegebenenfalls mit Zinn dotiertes Indiumoxid; oder dergleichen umfasst.

8. Beschichtetes Substrat nach Anspruch 6, wobei die mehrschichtigen Metalloxidbeschichtungen wenigstens eine Schicht aus Material mit hohem Brechungsindex und wenigstens eine Schicht aus Material mit niedrigem Brechungsindex umfassen.

9. Beschichtetes Substrat nach Anspruch 6, wobei die mehrschichtige Beschichtung eine alternierende Anordnung von n infrarotreflektierenden (IR) Schichten und n + 1 dielektrischen Schichten mit $n \geq 1$ umfasst, so dass jede IR-Schicht von zwei dielektrischen Schichten umgeben ist.

10. Beschichtetes Substrat nach Anspruch 9, wobei die mehrschichtige Beschichtung umfasst

    a. wenigstens eine Silberschicht und eine Abfolge: Substrat/MeO/ZnO:AlSi/Ag/AlSi-MeO, wobei MeO ein Metalloxid, wie z.B. $SnO_2$, $TiO_2$, $In_2O_3$, $Bi_2O_3$, $ZrO_2$, $Ta_2O_5$, $SiO_2$ oder $Al_2O_3$, oder ein Gemisch davon ist; oder
    b. eine erste dielektrische Schicht, die Siliciumnitrid enthält; eine erste Ni- oder NiCrenthaltende Schicht; eine Infrarot(IR)-reflektierende Schicht, die Silber umfasst; eine zweite Ni- oder NiCrenthaltende Schicht; und eine zweite dielektrische Schicht, die Siliciumnitrid enthält; oder
    c. eine Infrarot(IR)-reflektierende Schicht in Kontakt mit und angeordnet zwischen einer ersten und einer zweiten Schicht, wobei die zweite Schicht NiCrOx umfasst; und wobei wenigstens die zweite Schicht, die NiCrOx umfasst, oxidationsabgestuft ist, so dass ein erster Teil der zweiten Schicht nahe der Infrarot(IR)-reflektierenden Schicht weniger oxidiert ist als ein zweiter Teil der zweiten Schicht, der weiter von der Infrarot(IR)-reflektierenden Schicht entfernt ist;
oder

d. eine dielektrische Schicht; eine erste Schicht, die Zinkoxid umfasst, über der dielektrischen Schicht angeordnet; eine Infrarot(IR)-reflektierende Schicht, die Silber umfasst, angeordnet über und in Kontakt mit der ersten Schicht, die Zinkoxid umfasst; eine Schicht, die ein Oxid vion NiCr umfasst, angeordnet über und in Kontakt mit der IR-reflektierenden Schicht; und eine weitere dielektrische Schicht, angeordnet über der zweiten Schicht, die Zinkoxid umfasst;
oder

e. eine erste dielektrische Schicht; eine erste Infrarot(IR)-reflektierende Schicht, die Silber umfasst, angeordnet über wenigstens der ersten dielektrischen Schicht; eine erste Schicht, die Zinkoxid umfasst, angeordnet über wenigstens der ersten IR-reflektierenden Schicht und der ersten dielektrischen Schicht; eine zweite IR-reflektierende Schicht, die Silber umfasst, angeordnet über und in Kontakt mit der ersten Schicht, die Zinkoxid umfasst; eine Schicht, die ein ein Oxid von NiCr umfasst, angeordnet über und in Kontakt mit der zweiten Ir-reflektierenden Schicht; eine zweite Schicht, die Zinkoxid umfasst, angeordnet über und in Kontakt mit der Schicht, die das Oxid von NiCr umfasst; und eine weitere dielektrische Schicht, angeordnet über wenigstens der zweiten Schicht; die Zinkoxid umfasst;
oder

f. eine erste dielektrische Schicht; eine erste Schicht, die Zinkoxid umfasst, angeordnet über der dielektrischen Schicht; eine Infrarot(IR)-reflektierende Schicht, die Silber umfasst, angeordnet über und in Kontakt mit der ersten Schicht, die Zinkoxid umfasst; eine zweite Schicht, die Zinkoxid umfasst, angeordnet über der IR-Schicht; und eine zweite dielektrische Schicht, angeordnet über der zweiten Schicht, die Zinkoxid umfasst;
oder

g. eine erste dielektrische Schicht; eine erste IR-Schicht, die Silber umfasst; eine zweite dielektrische Schicht; eine zweite IR-Schicht; eine dritte dielektrische Schicht, wobei die erste, die zweite und die dritte dielektrische Schicht mehrere Schichten umfassen können;
oder

h. eine erste dielektrische Schicht; eine erste IR-Schicht, die Silber umfasst; eine zweite dielektrische Schicht; eine zweite IR-Schicht; eine dritte dielektrische Schicht; eine dritte IR-Schicht; eine vierte dielektrische Schicht, wobei die erste, die zweite, die dritte und die vierte dielektrische Schicht mehrere Schichten umfassen können.

11. Beschichtetes Substrat nach einem der vorstehenden Ansprüche, mit einer ersten Funktionsbeschichtung auf wenigstens einem Teil einer ersten Oberfläche und einer zweiten Funktionsbeschichtung auf wenigstens einem Teil der zweiten Oberfläche, wobei wenigstens eine von der ersten und der zweiten Funktionsbeschichtung mit einer Deckschicht nach einem der Ansprüche 1 bis 10 versehen ist.

12. Beschichtetes Substrat nach einem der Ansprüche 1 bis 11, ferner versehen mit wenigstens einer temporären Schutzschicht, wie z.B. temporären Kohlenstoffschutzschichten, temporären Polymerschutzschichten, abziehbaren Schutzschichten, über und in Kontakt mit der Magnetron-gesputterten Deckschicht aus einem Mischmetalloxid.

13. Wärmebehandeltes beschichtetes Substrat, umfassend ein transparentes Substrat mit zwei gegenüberliegenden Oberflächen, wobei wenigstens eine Oberfläche mit einer Funktionsbeschichtung versehen ist,

**dadurch gekennzeichnet, dass** das transparente Substrat über und in Kontakt mit der Funktionsbeschichtung mit einer Magnetron-gesputterten Deckschicht aus einem Mischmetalloxid umfassend wenigstens $SiO_x$, $TiO_y$ und $ZrO_z$, wobei x, y, z in dem Bereich von 1,8 bis 2,2 liegen, versehen ist,
wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und
wobei die Deckschicht eine Dicke von 0,1 bis 10 nm aufweist.

14. Mehrfachverglasungseinheit umfassend wenigstens ein beschichtetes Substrat nach einem der Ansprüche 1 bis 12.

15. Verfahren zur Herstellung eines beschichteten Substrats, umfassend nacheinander wenigstens die Schritte:

1. Bereitstellen eines transparenten Substrats mit zwei gegenüberliegenden, ersten und zweiten, Hauptoberflächen,

2. Abscheiden einer Funktionsbeschichtung auf wenigstens einem Teil der ersten Oberfläche des transparenten Substrats,

3. Abscheiden, über und in Kontakt mit der Funktionsbeschichtung, einer Deckschicht, die ein Mischmetalloxid umfasst, das wenigstens $SiO_x$, $TiO_y$ und $ZrO_z$ umfasst, wobei x, y, z in dem Bereich von 1,8 bis 2,2 liegen, durch ein Magnetron-Sputterverfahren, wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und wobei die Deckschicht eine Dicke von 0,1 bis 10 nm aufweist.

16. Verfahren zur Herstellung eines wärmebehandelten beschichteten Substrats, umfassend nacheinander wenigstens die Schritte:

1. Bereitstellen eines transparenten Substrats mit zwei gegenüberliegenden, ersten und zweiten, Hauptoberflächen,

2. Abscheiden einer Funktionsbeschichtung auf wenigstens einem Teil der ersten Oberfläche des transparenten Substrats,

3. Abscheiden, über und in Kontakt mit der Funktionsbeschichtung, einer Deckschicht, die ein Mischmetalloxid umfasst, das wenigstens $SiO_x$, $TiO_y$ und $ZrO_z$ umfasst, wobei x, y, z in dem Bereich von 1,8 bis 2,2 liegen, durch ein Magnetron-Sputterverfahren,

wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und wobei die Deckschicht eine Dicke von 0,1 bis 10 nm aufweist,

4. Unterwerfen des beschichteten Substrats an eine Wärmebehandlung.

17. Verfahren zur Herstellung eines doppelseitig beschichteten Substrats, umfassend nacheinander wenigstens die Schritte:

1. Bereitstellen eines transparenten Substrats mit zwei gegenüberliegenden, ersten und zweiten, Hauptoberflächen, wobei die erste Oberfläche frei liegt,

2. Abscheiden einer ersten Funktionsbeschichtung auf wenigstens einen Teil der ersten Oberfläche des transparenten Substrats,

3. Abscheiden, über und in Kontakt mit der ersten Funktionsbeschichtung, einer Deckschicht, die ein Mischmetalloxid umfasst, das wenigstens $SiO_x$, $TiO_y$ und $ZrO_z$ umfasst, wobei x, y, z in dem Bereich von 1,8 bis 2,2 liegen, durch ein Magnetron-Sputterverfahren,

wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und wobei die Deckschicht eine Dicke von 0,1 bis 10 nm aufweist,

4. Umdrehen des Substrats, um die zweite Oberfläche freizulegen,

5. Abscheiden einer zweiten Funktionsbeschichtung auf wenigstens einen Teil der zweiten Oberfläche des transparenten Substrats, um ein doppelseitig beschichtetes transparentes Substrat bereitzustellen,

6. Gegebenenfalls Abscheiden, über und in Kontakt mit der zweiten Funktionsbeschichtung, einer Deckschicht, die ein Mischmetalloxid umfasst, das wenigstens $SiO_x$, $TiO_y$ und $ZrO_z$ umfasst, wobei x, y, z in dem Bereich von 1,8 bis 2,2 liegen, durch ein Magnetron-Sputterverfahren,

wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und
wobei die Deckschicht eine Dicke von 0,1 bis 10 nm aufweist,

7. gegebenenfalls Unterwerfen des doppelseitig beschichteten transparenten Substrats an eine Wärmebehandlung.

**18.** Verfahren nach einem der Ansprüche 15 bis 17, wobei das Abscheiden der Deckschicht, die wenigstens Silicium, Titan und Zirkonium umfasst, durch ein Magnetron-Sputterverfahren unter Verwendung von entweder metallischen oder keramischen Targets durchgeführt wird, um die wenigstens drei Titan-, Zirkonium- und Siliciumelemente bereitzustellen.

**19.** Verfahren nach einem der Ansprüche 15 bis 17, wobei das Abscheiden der Deckschicht, die wenigstens Silicium, Titan und Zirkonium umfasst, durch ein Magnetron-Sputterverfahren unter Verwendung eines keramischen Targets, das die Oxide von Titan und Zirkonium umfasst, und einer metallischen Form von Silicium durchgeführt wird.

**20.** Verwendung einer Deckschicht für ein transparentes Substrat, das mit einer Funktionsbeschichtung versehen ist, wobei die Deckschicht ein Magnetron-gesputtertes Mischmetalloxid ist, das wenigstens $SiO_x$, $TiO_y$ und $ZrO_z$ umfasst, wobei x, y, z in dem Bereich von 1,8 bis 2,2 liegen,

wobei die Deckschicht umfasst

- von 10 bis 65 At.-% Silicium,
- von 8 bis 38 At.-% Titan,
- von 25 bis 80 At.-% Zirkonium,

mit insgesamt 100 At.-% der Metalle, und
wobei die Deckschicht eine Dicke von 0,1 bis 10 nm aufweist;
zum Verbessern der Haltbarkeit durch Erhöhung der Abriebfestigkeit um wenigstens 10 %.

## Revendications

**1.** Substrat revêtu comprenant un substrat transparent ayant deux grandes première et seconde surfaces opposées, au moins une surface étant pourvue d'un revêtement fonctionnel,

**caractérisé en ce que** le substrat transparent est pourvu, au-dessus et en contact avec le revêtement fonctionnel, d'une couche de finition pulvérisée par magnétron d'un oxyde métallique mixte comprenant au moins $SiO_x$, $TiO_y$ et $ZrO_z$, x, y, z allant de 1,8 à 2,2,
dans lequel la couche de finition comprend

- de 10 à 65 % at. de silicium,
- de 8 à 38 % at. de titane,
- de 25 à 80 % at. de zirconium,

pour un total de 100 % at. des métaux, et

dans lequel la couche de finition a une épaisseur de 0,1 à 10 nm.

2. Substrat revêtu selon la revendication 1, dans lequel l'oxyde métallique mixte de la couche de finition comprend de 15 à 60 % at. de silicium.

3. Substrat revêtu selon la revendication 1, dans lequel l'oxyde métallique mixte de la couche de finition comprend de 10 à 35 % at. de titane.

4. Substrat revêtu selon la revendication 1, dans lequel l'oxyde métallique mixte de la couche de finition comprend de 25 à 70 % at. de zirconium.

5. Substrat revêtu selon l'une quelconque des revendications précédentes, dans lequel le revêtement fonctionnel est un revêtement à contrôle solaire, un revêtement conducteur, un revêtement antireflet, un revêtement décoratif et/ou un revêtement à faible émissivité.

6. Substrat revêtu selon l'une quelconque des revendications précédentes, dans lequel le revêtement fonctionnel est un revêtement d'oxyde métallique monocouche, un revêtement d'oxyde métallique multicouche, un revêtement d'oxyde non métallique ou un revêtement multicouche.

7. Substrat revêtu selon la revendication 6, dans lequel le revêtement d'oxyde métallique monocouche comprend un oxyde de zinc dopé avec de l'aluminium, du gallium ou du hafnium ; un oxyde métallique mixte de zinc et d'étain ; un oxyde d'étain éventuellement dopé avec du fluor ou de l'antimoine ; un oxyde d'indium éventuellement dopé avec de l'étain ; ou un analogue.

8. Substrat revêtu selon la revendication 6, dans lequel les revêtements d'oxyde métallique multicouches comprennent au moins une couche de matériau à indice de réfraction élevé, et au moins une couche de matériau à indice de réfraction faible.

9. Substrat revêtu selon la revendication 6, dans lequel le revêtement multicouche comprend un agencement alterné de n couches réfléchissant les infrarouges (IR) et de n + 1 couches diélectriques, avec n $\geq$ 1, de sorte que chaque couche IR est entourée par deux couches diélectriques.

10. Substrat revêtu selon la revendication 9, dans lequel le revêtement multicouche comprend

   a. au moins une couche d'argent et une séquence : substrat/MeO/ZnO:AlSi/Ag/AlSi-MeO où MeO est un oxyde métallique tel que $SnO_2$, $TiO_2$, $In_2O_3$, $Bi_2O_3$, $ZrO_2$, $Ta_2O_5$, $SiO_2$ ou $Al_2O_3$ ou un mélange de ceux-ci ; ou
   b. une première couche diélectrique comprenant du nitrure de silicium ; une première couche comprenant du Ni ou du NiCr ; une couche réfléchissant les infrarouges (IR) comprenant de l'argent ; une seconde couche comprenant du Ni ou du NiCr ; et une deuxième couche diélectrique comprenant du nitrure de silicium ; ou
   c. une couche réfléchissant les infrarouges (IR) en contact et prise en sandwich entre les première et seconde couches, ladite seconde couche comprenant du NiCrOx ; et dans lequel au moins ladite seconde couche comprenant du NiCrOx est graduelle en oxydation de sorte qu'une première partie de ladite seconde couche proche de ladite couche réfléchissant les infrarouges (IR) est moins oxydée qu'une seconde partie de ladite seconde couche qui est plus éloignée de ladite couche réfléchissant les infrarouges (IR) ; ou
   d. une couche diélectrique ; une première couche comprenant de l'oxyde de zinc située au-dessus de la couche diélectrique ; une couche réfléchissant les infrarouges (IR) comprenant de l'argent située au-dessus de la première couche comprenant de l'oxyde de zinc et en contact avec celle-ci ; une couche comprenant un oxyde de NiCr située au-dessus de la couche réfléchissant les infrarouges et en contact avec celle-ci ; une seconde couche comprenant de l'oxyde de zinc située au-dessus de la couche comprenant de l'oxyde de NiCr et en contact avec celle-ci ; et une autre couche diélectrique située au-dessus de la seconde couche comprenant de l'oxyde de zinc ; ou
   e. une première couche diélectrique ; une première couche réfléchissant les infrarouges (IR) comprenant de l'argent située au-dessus d'au moins la première couche diélectrique ; une première couche comprenant de l'oxyde de zinc située au-dessus d'au moins la première couche réfléchissant les infrarouges et la première couche diélectrique ; une deuxième couche réfléchissant les infrarouges comprenant de l'argent située au-dessus de la première couche comprenant de l'oxyde de zinc et en contact avec celle-ci ; une couche comprenant un oxyde de NiCr située au-dessus de la deuxième couche réfléchissant les infrarouges et en contact avec celle-ci ; une seconde couche comprenant de l'oxyde de zinc située au-dessus de la couche comprenant l'oxyde de NiCr et en contact avec celle-ci ; et une autre couche diélectrique située au-dessus d'au moins la seconde couche ; comprenant de l'oxyde de zinc ;
ou
f. une première couche diélectrique ; une première couche comprenant de l'oxyde de zinc située au-dessus de la couche diélectrique ; une couche réfléchissant les infrarouges (IR) comprenant de l'argent située au-dessus de la première couche comprenant de l'oxyde de zinc et en contact avec celle-ci ; une seconde couche comprenant de l'oxyde de zinc située au-dessus de la couche réfléchissant les infrarouges ; et une deuxième couche diélectrique située au-dessus de la seconde couche comprenant de l'oxyde de zinc ;
ou
g. une première couche diélectrique ; une première couche IR comprenant de l'argent ; une deuxième couche diélectrique ; une deuxième couche IR ; une troisième couche diélectrique, les première, deuxième et troisième couches diélectriques pouvant comprendre plusieurs couches ;
ou
h. une première couche diélectrique ; une première couche IR comprenant de l'argent ; une deuxième couche diélectrique ; une deuxième couche IR ; une troisième couche diélectrique ; une troisième couche IR ; une quatrième couche diélectrique, les première, deuxième, troisième et quatrième couches diélectriques pouvant comprendre plusieurs couches.

**11.** Substrat revêtu selon l'une quelconque des revendications précédentes, comportant un premier revêtement fonctionnel sur au moins une partie d'une première surface, et un second revêtement fonctionnel sur au moins une partie de la seconde surface, dans lequel au moins l'un du premier ou du second revêtement fonctionnel est pourvu d'une couche de finition selon l'une quelconque des revendications 1 à 10.

**12.** Substrat revêtu selon l'une quelconque des revendications 1 à 11, pourvu en outre d'au moins une couche protectrice temporaire, telle que des couches protectrices temporaires de carbone, des couches protectrices temporaires polymériques, des couches protectrices pelables, au-dessus et en contact avec la couche de finition pulvérisée par magnétron d'un oxyde métallique mixte.

**13.** Substrat revêtu traité thermiquement comprenant un substrat transparent ayant deux surfaces opposées, dans lequel au moins une surface est pourvue d'un revêtement fonctionnel,

**caractérisé en ce que** le substrat transparent est pourvu, au-dessus et en contact avec le revêtement fonctionnel, d'une couche de finition pulvérisée par magnétron d'un oxyde métallique mixte comprenant au moins $SiO_x$, $TiO_y$ et $ZrO_z$, x, y, z allant de 1,8 à 2,2,
dans lequel la couche de finition comprend

- de 10 à 65 % at. de silicium,
- de 8 à 38 % at. de titane,
- de 25 à 80 % at. de zirconium,

pour un total de 100 % at. des métaux, et
dans lequel la couche de finition a une épaisseur de 0,1 à 10 nm.

**14.** Unité de vitrage multiple comprenant au moins un substrat revêtu selon l'une quelconque des revendications 1 à 12.

**15.** Procédé de préparation d'un substrat revêtu comprenant, en séquence, au moins les étapes de :

1. fourniture d'un substrat transparent ayant deux grandes première et seconde surfaces opposées,
2. dépôt d'un revêtement fonctionnel sur au moins une partie de la première surface du substrat transparent,
3. dépôt, au-dessus et en contact avec le revêtement fonctionnel, d'une couche de finition comprenant un oxyde métallique mixte comprenant au moins $SiO_x$, $TiO_y$ et $ZrO_z$, x, y, z allant de 1,8 à 2,2, par une technique de pulvérisation par magnétron,
dans lequel la couche de finition comprend

- de 10 à 65 % at. de silicium,

- de 8 à 38 % at. de titane,
- de 25 à 80 % at. de zirconium,

pour un total de 100 % at. des métaux, et
dans lequel la couche de finition a une épaisseur de 0,1 à 10 nm.

16. Procédé de préparation d'un substrat revêtu traité thermiquement comprenant, en séquence, au moins les étapes de :

1. fourniture d'un substrat transparent ayant deux grandes première et seconde surfaces opposées,
2. dépôt d'un revêtement fonctionnel sur au moins une partie de la première surface du substrat transparent,
3. dépôt, au-dessus et en contact avec le revêtement fonctionnel, d'une couche de finition comprenant un oxyde métallique mixte comprenant au moins $SiO_x$, $TiO_y$ et $ZrO_z$, x, y, z allant de 1,8 à 2,2, par une technique de pulvérisation par magnétron,

dans lequel la couche de finition comprend

- de 10 à 65 % at. de silicium,
- de 8 à 38 % at. de titane,
- de 25 à 80 % at. de zirconium,

pour un total de 100 % at. des métaux, et
dans lequel la couche de finition a une épaisseur de 0,1 à 10 nm,

4. soumission du substrat revêtu à un traitement thermique.

17. Procédé de préparation d'un substrat revêtu double face comprenant, en séquence, au moins les étapes de :

1. fourniture d'un substrat transparent ayant deux grandes première et seconde surfaces opposées, la première surface étant exposée,
2. dépôt d'un premier revêtement fonctionnel sur au moins une partie de la première surface du substrat transparent,
3. dépôt, au-dessus et en contact avec le premier revêtement fonctionnel, d'une couche de finition comprenant un oxyde métallique mixte comprenant au moins $SiO_x$, $TiO_y$ et $ZrO_z$, x, y, z allant de 1,8 à 2,2, par une technique de pulvérisation par magnétron,

dans lequel la couche de finition comprend

- de 10 à 65 % at. de silicium,
- de 8 à 38 % at. de titane,
- de 25 à 80 % at. de zirconium,

pour un total de 100 % at. des métaux, et
dans lequel la couche de finition a une épaisseur de 0,1 à 10 nm,

4. retournement du substrat de manière à exposer la seconde surface,
5. dépôt d'un second revêtement fonctionnel sur au moins une partie de la seconde surface du substrat transparent, pour fournir un substrat transparent revêtu double face,
6. Éventuellement, dépôt, au-dessus et en contact avec le second revêtement fonctionnel, d'une couche de finition comprenant un oxyde métallique mixte comprenant au moins $SiO_x$, $TiO_y$ et $ZrO_z$, x, y, z allant de 1,8 à 2,2, par une technique de pulvérisation par magnétron,

dans lequel la couche de finition comprend

- de 10 à 65 % at. de silicium,
- de 8 à 38 % at. de titane,
- de 25 à 80 % at. de zirconium,

pour un total de 100 % at. des métaux, et

dans lequel la couche de finition a une épaisseur de 0,1 à 10 nm,

7. éventuellement, soumission du substrat transparent revêtu double face à un traitement thermique.

**18.** Procédé selon l'une quelconque des revendications 15 à 17, dans lequel le dépôt de la couche de finition comprenant au moins du silicium, du titane et du zirconium, par une technique de pulvérisation par magnétron, est effectué en utilisant des cibles soit métalliques, soit de céramique pour fournir les au moins trois éléments titane, zirconium ou silicium.

**19.** Procédé selon l'une quelconque des revendications 15 à 17, dans lequel le dépôt de la couche de finition comprenant au moins du silicium, du titane et du zirconium, par une technique de pulvérisation par magnétron, est effectué en utilisant une cible de céramique comprenant les oxydes de titane et de zirconium, et une forme métallique de silicium.

**20.** Utilisation d'une couche de finition pour un substrat transparent pourvu d'un revêtement fonctionnel, dans laquelle la couche de finition est un oxyde métallique mixte pulvérisé par magnétron comprenant au moins $SiO_x$, $TiO_y$ et $ZrO_z$, x, y, z allant de 1,8 à 2,2,

dans laquelle la couche de finition comprend

- de 10 à 65 % at. de silicium,
- de 8 à 38 % at. de titane,
- de 25 à 80 % at. de zirconium,

pour un total de 100 % at. des métaux, et
dans laquelle la couche de finition a une épaisseur de 0,1 à 10 nm ;
pour améliorer la durabilité en augmentant la résistance à l'abrasion d'au moins 10 %.

**EP 4 126 779 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009115596 A1
- WO 2010031808 A1
- WO 2018202595 A1